# EUROPÄISCHE PATENTANMELDUNG

(11) **EP 1 088 712 A1**
(43) Veröffentlichungstag der Anmeldung: **04.04.2001**
(21) Anmeldenummer: 00119446.3
(22) Anmeldetag: 14.09.2000
(51) Int. Cl.: B60R 21/20

(54) **Baugruppe aus einem Fahrzeuglenkrad und einem Gassack-Modul mit komplementären Anschluss- Kontaktelementen**

(30) Priorität: 29.09.1999 DE 29917129 U
(71) Anmelder: TRW Automotive Safety Systems GmbH & Co. KG, 63743 Aschaffenburg (DE)
(72) Erfinder: Frisch, Ralph, 63776 Mömbris (DE); Werner, Heribert, 63796 Kahl (DE)
(74) Vertreter: Sties, Jochen, Dipl.-Ing.

(57) **Zusammenfassung**

Die Erfindung betrifft eine Baugruppe aus einem Fahrzeuglenkrad (10) und einem Gassack-Modul (14), wobei das Gassack-Modul mit mindestens einem Zünder (20, 22) für einen Gasgenerator und das Fahrzeuglenkrad mit einem Anschluß (34, 36) für den Zünder versehen ist. Die Baugruppe ist dadurch gekennzeichnet, daß der Anschluß mit einem Kontaktelement (40) versehen ist, das beim Aufsetzen des Gassack-Moduls auf das Fahrzeuglenkrad automatisch in ein komplementäres Kontaktelement am Zünder (20, 22) eingreift.

## Beschreibung

Die Erfindung betrifft eine Baugruppe aus einem Fahrzeuglenkrad und einem Gassack-Modul, wobei das Gassack-Modul mit mindestens einem Zünder für einen Gasgenerator und das Fahrzeuglenkrad mit einem Anschluß für den Zünder versehen ist.

Bisher wurde bei der Montage des Gassack-Moduls ein Kabel verwendet, um den Zünder mit dem Anschluß zu verbinden. Somit mußte bei der Montage ein manueller Steckvorgang vorgenommen werden, um die Kontaktierung des Zünders zu erzielen.

Die Aufgabe der Erfindung besteht darin, den Montagevorgang zu vereinfachen.

Zu diesem Zweck ist erfindungsgemäß vorgesehen, daß der Anschluß mit einem Kontaktelement versehen ist, der beim Aufsetzen des Gassack-Moduls auf das Fahrzeuglenkrad automatisch in ein komplementäres Kontaktelement am Zünder eingreift. Auf diese Weise entfällt der zusätzliche Arbeitsschritt des Aufsteckens des Kabels auf den Zünder und den Anschluß.

Gemäß einer bevorzugten Ausführungsform ist vorgesehen, daß das Kontaktelement des Anschlusses verschiebbar am Fahrzeuglenkrad angebracht ist. Auf diese Weise erfolgt eine automatische Positionierung und Zentrierung des Kontaktelementes des Anschlusses während des Aufsetzens des Gassack-Moduls, so daß keine extrem hohen Toleranzen bei der Herstellung und beim Aufsetzen eingehalten werden müssen, um eine zuverlässige Kontaktierung zu gewährleisten.

Gemäß der bevorzugten Ausführungsform ist vorgesehen, daß das Kontaktelement als Steckverbinderteil ausgebildet ist, das mit Aussparungen versehen ist, in die Fixierungslaschen eingreifen, die am Fahrzeuglenkrad ausgebildet sind. Die Fixierungslaschen halten den Anschluß mit dem Kontaktelement zuverlässig am Fahrzeuglenkrad, während gleichzeitig bei geeigneter Dimensionierung der Aussparungen relativ zu den Fixierungslaschen eine Verschiebbarkeit des Anschlusses in zwei zueinander senkrechten Richtungen möglich ist.

Vorzugsweise ist eine Einführhilfe vorgesehen, die beim Aufsetzen des Gassack-Moduls auf das Fahrzeuglenkrad die beiden Kontaktelemente ineinanderführt. Als Einführhilfe ist beispielsweise eine Einführschräge oder eine trichterförmige Erweiterung geeignet, die das verschiebbare Kontaktelement am Fahrzeuglenkrad automatisch in die Stellung bringt, in der die beiden Kontaktelemente ineinander einrasten können.

Vorteilhafte Ausgestaltungen der Erfindung ergeben sich aus den Unteransprüchen.

Die Erfindung wird nachfolgend unter Bezugnahme auf eine bevorzugte Ausführungsform beschrieben, die in den beigefügten Zeichnungen dargestellt ist. In diesen zeigen:
- Figur 1 in einem Schnitt ein Fahrzeuglenkrad mit einem Gassack-Modul;
- Figur 2 in vergrößertem Maßstab einen Ausschnitt von Figur 1; und
- Figur 3 in einer perspektivischen Ansicht einen Anschluß mit Kontaktelement.

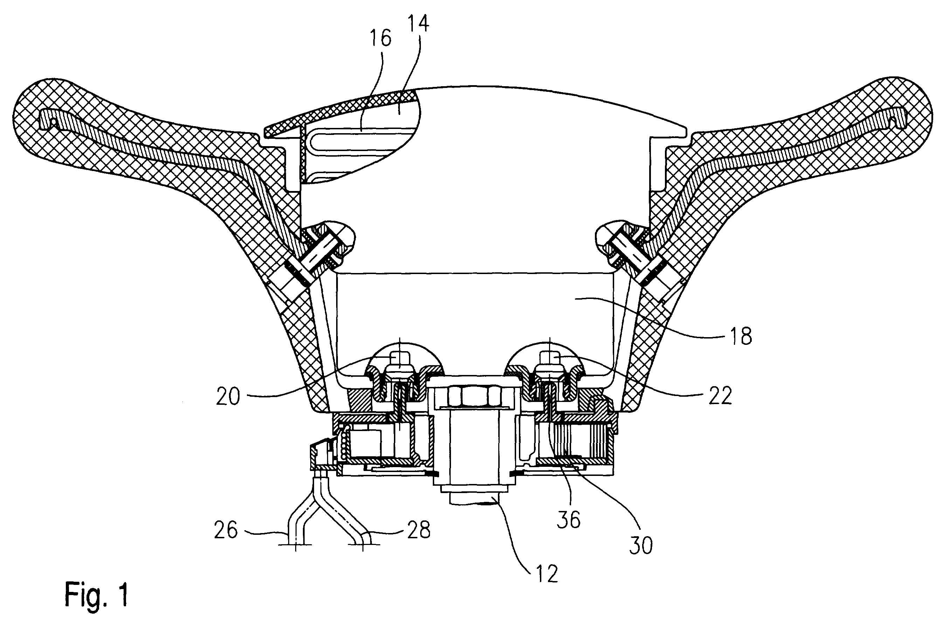

In Figur 1 ist ein Fahrzeuglenkrad 10 zu sehen, das mit einer Lenkwelle 12 verbunden ist. Das Lenkrad weist ein Gassack-Modul 14 auf, das im wesentlichen aus einem Gassack 16 und einem Gasgenerator 18 besteht. Der Gasgenerator 18 ist ein Zweikammer-Gasgenerator mit einem ersten Zünder 20 für die erste und einem zweiten Zünder 22 für die zweite Kammer. Die Zünder 20, 22 dienen dazu, eine in den Kammern angeordnete, gaserzeugende Ladung zu entzünden.

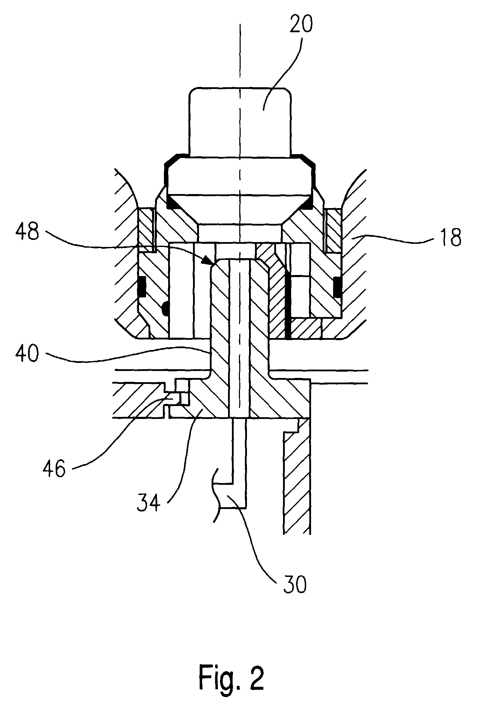

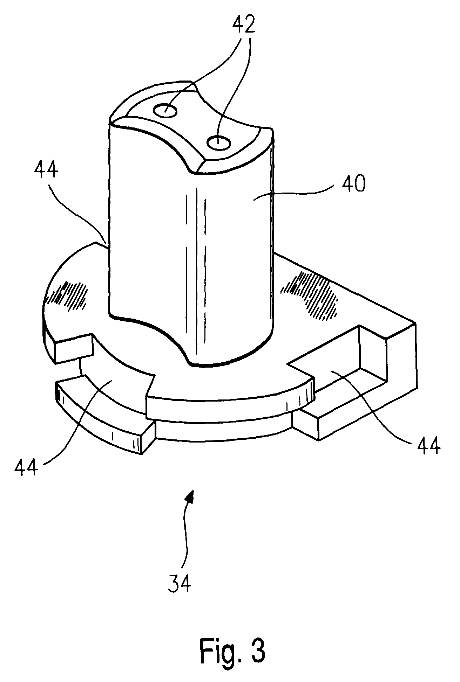

Zur Kontaktierung der beiden Zünder 20, 22 sind fahrzeugseitig zwei Leitungen 26, 28 vorgesehen. Sie sind jeweils mit einem spiralförmig gewickelten, mehrpoligen Flachbandleiterkabel 30 verbunden, das eine elektrische Verbindung zwischen einem feststehenden Anschluß für die Leitungen 26, 28 und den am Lenkrad vorgesehenen und sich somit mitdrehenden Anschlüssen 34, 36 für die Zünder 20, 22 darstellt. Die Ausgestaltung der Anschlüsse 34, 36 wird nachfolgend unter Bezugnahme auf die Figuren 2 und 3 beschrieben, in denen der Anschluß 34 vergrößert dargestellt ist.

Der Anschluß 34 weist ein Kontaktelement 40 auf, das hier als Steckverbinderteil mit zwei Kontaktbuchsen 42 ausgebildet ist. Am Kontaktelement 40 sind drei Aussparungen 44 vorgesehen, die mit Fixierungslaschen 46 zusammenwirken, die an dem Fahrzeuglenkrad ausgebildet sind. Die Fixierungslaschen 46 und die Aussparungen 44 sind so dimensioniert, daß das Kontaktelement 40 relativ zum Fahrzeuglenkrad in zwei zueinander senkrechten Richtungen verschiebbar ist, nämlich in einer Ebene senkrecht zur Lenkwelle 12.

Am oberen Ende ist das Kontaktelement 40 mit einer Einführschräge 48 versehen, die dann, wenn das Gassack-Modul 14 auf das Lenkrad 10 aufgesetzt wird, das Kontaktelement 40 in ein komplementäres Kontaktelement einführt, das am Zünder 20 vorgesehen ist. Aufgrund des Spiels zwischen den Fixierungslaschen 46 und den Aussparungen 44 kann sich dabei das Kontaktelement 40 automatisch so positionieren, daß das Einstecken des Zünders 20 in das Kontaktelement 40 möglich ist. Hierzu sind keinerlei externe Handgriffe erforderlich.

## Patentansprüche

1. Baugruppe aus einem Fahrzeuglenkrad (10) und einem GassackModul (14), wobei das Gassack-Modul mit mindestens einem Zünder (20, 22) für einen Gasgenerator und das Fahrzeuglenkrad mit einem Anschluß (34, 36) für den Zünder versehen ist,
dadurch gekennzeichnet, daß der Anschluß mit einem Kontaktelement (40) versehen ist, das beim Aufsetzen des Gassack-Moduls auf das Fahrzeuglenkrad automatisch in ein komplementäres Kontaktelement am Zünder (20, 22) eingreift.

2. Baugruppe nach Anspruch 1, dadurch gekennzeichnet, daß das Kontaktelement (40) des Anschlusses verschiebbar am Fahrzeuglenkrad angebracht ist.

3. Baugruppe nach Anspruch 2, dadurch gekennzeichnet, daß das Kontaktelement als Steckverbinderteil (40) ausgebildet ist, das mit Aussparungen (44) versehen ist, in die Fixierungslaschen (46) eingreifen, die am Fahrzeuglenkrad ausgebildet sind.

4. Baugruppe nach einem der vorhergehenden Ansprüche, dadurch gekennzeichnet, daß eine Einführhilfe (48) vorgesehen ist, die beim Aufsetzen des Gassack-Moduls auf das Fahrzeuglenkrad die beiden Kontaktelemente ineinanderführt.
